# EUROPEAN PATENT APPLICATION

(11) **EP 4 767 831 A1**
(43) Date of publication of application: **01.07.2026**
(21) Application number: 24307302.0
(22) Date of filing: 24.12.2024
(51) Int. Cl.: A23J 3/08, A23L 33/19, A23L 33/00

(54) **PURIFICATION OF MAMMALIAN GLYCOSYLATED WHEY PROTEINS BY ETHANOL PRECIPITATION**

(71) Applicant: Université de Lorraine, 54000 Nancy (FR)
(72) Inventor: BURGAIN, Jennifer, 54230 CHAVIGNY (FR); DOS SANTOS MORAIS, Raphael, 87100 LIMOGES (FR); GAIANI, Claire, 54600 VILLERS LES NANCY (FR); PAUL, Arnaud, 54380 DIEULOUARD (FR)
(74) Representative: Plasseraud IP

(57) **Abstract**

The present invention relates to a method of extracting glycosylated proteins from dairy stream, said method comprising the step of precipitating the glycosylated proteins of the dairy stream so as to obtain a protein concentrate by mixing a dairy stream with ethanol, thereby obtaining a dairy stream-ethanol solution wherein the ethanol concentration in the dairy stream-ethanol solution is of from 20% to 60% v/v, and wherein the glycoproteins represent at least 30% w/w of the concentrate.

## Description

### Technical Field

This disclosure pertains to the field of protein purification.

### Background Art

Agro-resources and their co-products contain significant quantities of underutilized or undervalued glycoproteins. Numerous scientific studies highlight the potential of glycoproteins in combating microbial or viral infections, as well as in stimulating immunity. Their activity is only effective at sufficient concentrations, making it crucial to develop processes that enable their concentration for the formulation of food ingredients, nutraceuticals, etc.

Glycoproteins can originate from animal sources (e.g., mammalian milk, including cow's milk) or plant sources (e.g., lectins, proteins found in plant cell walls). This invention details a fast, cost-effective process, breaking with the state of the art, that allows the production of glycoprotein-enriched concentrates from cow or goat whey, with a balanced glycoprotein profile representative of the original source.

The formulation of infant formula powders was chosen as an example in the use of glycoprotein. Breastfeeding is the reference feeding method for newborns. The main proteins in breast milk are soluble proteins (whey proteins) and caseins, whose proportions change as the baby grows. Breastfeeding protects newborns from infections caused by pathogens, and glycoproteins in breast milk play a key role in this function. An interesting example of glycoprotein is lactoferrin, which is abundantly present in breast milk (the third most prevalent protein). This glycoprotein significantly contributes to the proper development of the newborn's immune system by activating the natural defenses of the small intestine, which is highly fragile during the first months of a baby's life. Lactoferrin acts as an antimicrobial agent by binding iron, thus preventing pathogenic bacteria from using it for growth. This is why hospitals use lactoferrin to help reduce infections in premature babies. It has been shown that lactoferrin enhances the activity of leukocytes and also plays an immuno-strengthening role in the intestine.

However, not all infants are breastfed, and infant formula are designed to closely mimic human milk. Cow's milk, particularly whey, is most commonly used in the formulation of infant preparations. A few decades ago, whey was considered a useless by-product of cheese production. Today, thanks to the development of industrial methods such as centrifugation, filtration, and spray drying, various whey-derived powders can be produced. With a deeper understanding of its nutritional value, whey is now considered as an ingredient with significant added value. For example, lactoferrin is found in whey following the enzymatic coagulation of milk in cheese production.

Demineralized whey meets the needs for the production of infant formula Demineralized whey helps normalize serum protein, lactose, and mineral content to resemble the composition of human milk. However, bovine whey has lower glycoprotein content than what is found in human milk. The development of advanced membrane filtration and chromatography methods for whey now allows for the preparation of fractions enriched in lactoferrin, enabling the enrichment of infant formula. However, the cost of these operations remains high, and the resulting protein fraction is imbalanced compared to the glycoprotein profile of the treated whey.

The process has been optimized to extract glycoproteins from mammalian milk or from by-products (whey).

The objective of this project is to propose an extraction method that breaks with those currently in place. Indeed, current extraction methods are based on chromatographic techniques (ion exchange, affinity chromatography, etc.), which require expensive installations and qualified people for their implementation. Moreover, the operating cost is high, which is reflected in the final product price. As a result, infant formula currently available are rarely enriched with glycoproteins, and infants do not benefit from this natural protection.

The scientific literature is abundant with experimental protocols that allow proteins to precipitate using ethanol (typically highly concentrated ethanol, generally ≥80/90%). The objective of such manipulation is (1) the concentration of diluted protein samples, or (2) the exchange of the protein sample buffer (removal of SDS or other molecules, for example). Moreover, some research articles have investigated the molecular mechanisms that lead to protein precipitation when placed in a concentrated ethanol solution (see *doi:10.1016*/*j.ijbiomac.2011.11.005,* for example). However, no study has yet been conducted to link (1) the physicochemical properties of proteins, and (2) their tendencies to differentially precipitate in ethanol at varying concentrations.

Current solutions to purify glycosylated proteins from complex biological samples require the use of affinity chromatography systems, through the use of lectins.

However, these approaches are expensive, require extensive knowledge and expertise in protein biochemistry, require significant technological infrastructure, and do not allow for the purification of all glycosylated proteins within the sample.

### Summary

It is to the credit of the inventors to have developed a method that allows for the selective precipitation of glycosylated proteins within a complex protein mixture.

It is proposed a method of extracting glycosylated proteins from dairy stream, said method comprising the step of precipitating the glycosylated proteins of the dairy stream so as to obtain a protein concentrate by mixing a dairy stream with ethanol, thereby obtaining a dairy stream-ethanol solution wherein the ethanol concentration in the dairy stream-ethanol solution is of from 20% to 60% v/v, and wherein the glycosylated proteins represent at least 30% w/w of the concentrate.

The inventors have achieved outstanding results. Indeed, from a complex protein mixture comprising less than 1% glycosylated proteins, the method of the invention makes it possible to obtain a concentrate comprising at least 30% w/w, in particular at least 40% w/w, more particularly at least 50% w/w of glycosylated proteins.

Without wishing to be bound by any theory, the inventors are of the opinion that the remarkable results that they have obtained could be explained by the fact that proteins potentially precipitate differently in an ethanol solution due to their surface physicochemical properties. As a matter of fact, in contact with ethanol proteins interact with each other before precipitating. The inventors believe that a glycosylated protein, with polar chemical groups on its surface, might be more sensitive to the lack of an aqueous environment and thus precipitate before non-glycosylated proteins. In the opinion of the inventors, the selective precipitation of glycosylated proteins within a complex protein mixture is rendered possible by leveraging the ability of the proteins to precipitate at different ethanol concentrations.

Advantageously, the invention offers several significant benefits, including:
- Cost-Effectiveness: as shown by the experimental results, the method solely utilizes ethanol for the selective precipitation of glycosylated proteins, eliminating the need for expensive chromatographic techniques. This results in a substantial reduction in production costs, making glycosylated protein-enriched products more accessible.
- Simplicity and Efficiency : as shown by the experimental results, the process is straightforward, involving only the addition of ethanol and subsequent centrifugation. This simplicity reduces the need for specialized equipment and highly trained personnel, further lowering operational costs.
- High Yield of Glycosylated Proteins: The method effectively enriches the glycosylated protein content in the concentrate, achieving at least 30% w/w, in particular at least 40% w/w, more particularly at least 50% w/w of glycosylated proteins. This high yield ensures that the final product is rich in beneficial glycosylated proteins.
- Versatility: The process is applicable to various types of mammalian milk as shown in the experimental results. This versatility ensures that the method can be adapted to different dairy sources, providing a balanced glycosylated protein profile representative of the original source, which is particularly beneficial for applications such as infant formula enrichment.
- Enhanced Nutritional and Functional Benefits: The protein concentrate obtained through this method is suitable for use in various applications, such as the formulation of food ingredients, nutraceuticals, and infant formulas. The enhanced presence of glycosylated proteins provides added nutritional and functional benefits, such as immune system support and antimicrobial properties.
- Health Benefits: Glycosylated proteins derived from agro-resources or their by-products offer several health benefits, including:
   - Protection against infections (*e.g., E. coli, H. pylori, C. difficile, Shigella, Cryptosporidium, Streptococci,* rotavirus, etc.)
   - Strengthening of the immune system
   - Role in the prevention of certain cancers
   - Promotion of the colonization of the intestine by beneficial bacteria
- Environmental and Economic Impact: By utilizing underutilized or undervalued glycosylated proteins from agro-resources and their co-products, the invention contributes to the efficient use of agricultural by-products, reducing waste and adding value to these resources.
- Potential for Diverse Applications: Due to their interaction with bacteria and viruses, glycosylated proteins can also be used in surface treatments, particularly in medical environments, to limit biofilm formation and enhance the elimination of viruses and bacteria.

Advantageously, the ethanol of the method of the invention may be a food grade ethanol. Food grade ethanol is free from contaminants and impurities that could potentially affect the functional properties of glycosylated proteins. This ensures that the proteins retain their bioactivity, nutritional benefits, and functional integrity, making the final concentrate suitable for various applications, including infant formulas and nutraceuticals. The use of food grade ethanol allows the protein concentrate to be used in a wide range of food and beverage applications without the need for additional purification steps. This versatility simplifies the production process and broadens the potential uses of the glycoprotein-enriched concentrate.

### Detailed description of the invention

It is proposed a method of extracting glycosylated proteins from dairy stream, said method comprising the step of precipitating the glycosylated proteins of the dairy stream so as to obtain a protein concentrate by mixing a dairy stream with ethanol, thereby obtaining a dairy stream-ethanol solution wherein the ethanol concentration in the dairy stream-ethanol solution is of from 20% to 60% v/v, and wherein the glycosylated proteins represent at least 30% w/w of the concentrate.

As used herein, the term "dairy stream" refers to any liquid or semi-liquid product derived from the processing of mammalian milk. This includes, but is not limited to, milk itself, whey (both sweet and acidic), and other by-products of cheese production or other dairy processing activities. The dairy stream contains a mixture of proteins, including glycosylated and non-glycosylated proteins, as well as other components such as lactose, minerals, and fats. The term encompasses both fresh and processed forms of these products, including those that have been subjected to treatments such as pasteurization, filtration, or demineralization. The term "dairy stream" may refer to whey isolate or whey concentrate.

According to the present invention, the dairy stream may be from goat milk, bovine milk, sheep milk or human milk, in particular from goat milk or bovine milk, more particularly from goat milk.

According to the present invention, the dairy stream may be whey, in particular sweet whey or acidic whey, in particular sweet whey.

According to the present invention, the dairy stream may be sweet goat whey.

As used herein, the term "glycosylated proteins" or "glycoproteins" refers to proteins that have carbohydrate groups covalently attached to their polypeptide chain. This post-translational modification, known as glycosylation, typically occurs in the endoplasmic reticulum and Golgi apparatus of cells. Glycosylated proteins play crucial roles in various biological processes, including cell-cell recognition, immune response, and protein stability. The carbohydrate groups, or glycans, can vary in structure and composition, influencing the protein's function and interactions. Glycosylated proteins are found in both animal and plant sources, with examples including lactoferrin, immunoglobulins, and certain enzymes.

As used herein, the term "protein concentrate" refers to the product obtained after the selective precipitation of proteins from a dairy stream using ethanol, as described in the context of the invention. This concentrate is enriched in glycosylated proteins, which have been separated from non-glycosylated proteins and other components present in the dairy stream. The protein concentrate contains a higher proportion of glycosylated proteins relative to the initial dairy stream. The protein concentrate comprises at least 30% w/w of glycosylated proteins, in particular at least 40% w/w of glycosylated proteins, more particularly at least 50% w/w of glycosylated proteins. Advantageously, the concentrate is suitable for use in various applications, such as the formulation of food ingredients, nutraceuticals, and infant formulas, where the enhanced presence of glycosylated proteins provides added nutritional and functional benefits.

In the method of the invention, the protein concentrate comprises at least 30% w/w of glycosylated proteins, in particular at least 40% w/w of glycosylated proteins, more particularly at least 50% w/w of glycosylated proteins.

The ethanol concentration in the dairy stream-ethanol solution is critical for the selective precipitation of glycosylated proteins. In the method of the invention, ethanol concentration is of from 20% to 60% v/v, in particular of from 20% to 40% v/v, more particularly of from 25% to 35% v/v. These concentration ranges are optimal for differentiating the precipitation behavior of glycosylated proteins from non-glycosylated proteins. It is the opinion of the inventors that, at these ethanol concentrations, glycosylated proteins, which have polar chemical groups on their surfaces, are more sensitive to the non-aqueous environment and precipitate more readily than non-glycosylated proteins. This selective precipitation allows for the efficient enrichment of glycosylated proteins in the resulting protein concentrate. The chosen ethanol concentration ranges ensure that the process is both effective and economical, avoiding the need for higher ethanol concentrations that could increase costs and complicate the process. Additionally, maintaining ethanol concentration within these ranges helps to preserve the functional properties of the glycosylated proteins.

According to the invention, the ethanol concentration in the dairy stream-ethanol solution is of from 20% to 60% v/v, in particular of from 20% to 40% v/v, more particularly of from 25% to 35% v/v.

According to an embodiment, the precipitation of glycosylated proteins from the dairy stream is carried out at a temperature of from -20°C to 60°C, in particular of from 10°C to 30°C. These temperature ranges are critical for optimizing the selective precipitation process. Lower temperatures, such as -20°C, can enhance the precipitation of glycosylated proteins by reducing their solubility in the ethanol solution, thereby increasing the yield of glycosylated proteins in the concentrate. Conversely, higher temperatures, up to 60°C, can accelerate the precipitation process by increasing the kinetic energy of the molecules, facilitating their aggregation and subsequent precipitation. The specified temperature ranges provide flexibility in the process, allowing for adjustments based on the specific characteristics of the dairy stream and the desired properties of the final protein concentrate. By operating within this temperature range, the method ensures that the glycosylated proteins are efficiently precipitated while maintaining their functional integrity.

According to an embodiment, in the method of the invention, the precipitation is carried out for a duration of from 5 minutes to 300 minutes, in particular of from 20 minutes to 60 minutes. This time ranges provide flexibility in optimizing the selective precipitation process based on the specific characteristics of the dairy stream and the desired properties of the final protein concentrate. Shorter precipitation times, such as 5 minutes, may be sufficient for certain dairy streams where glycosylated proteins precipitate rapidly, while longer durations, up to 300 minutes, may be necessary for more complex mixtures or to achieve higher yields of glycosylated proteins. The specified time range ensures that the process can be tailored to different operational conditions and requirements, allowing for adjustments to maximize the efficiency and effectiveness of the precipitation. By providing a wide range of precipitation times, the method accommodates various processing scenarios, ensuring that the glycosylated proteins are efficiently precipitated and enriched in the protein concentrate. This flexibility enhances the practicality and applicability of the method for industrial-scale production.

According to an embodiment, the precipitation is carried out under stirring. The inclusion of stirring during the precipitation process is critical for ensuring uniform mixing and enhancing the interaction between the ethanol and the proteins in the dairy stream. Stirring helps to maintain a homogeneous solution, preventing localized high concentrations of ethanol that could lead to uneven precipitation or aggregation of proteins. This uniform mixing ensures that glycosylated proteins are consistently exposed to ethanol, promoting their selective precipitation. Additionally, stirring can enhance the rate of precipitation by facilitating the collision and aggregation of protein molecules, leading to a higher yield of glycosylated proteins in the concentrate. By incorporating stirring into the process, the method ensures that the glycosylated proteins are efficiently and uniformly precipitated, resulting in a protein concentrate with a higher purity and consistency.

According to an embodiment, in the method of the invention, before mixing the dairy stream with ethanol, the dairy stream is diluted. In this embodiment, the ratio of dilution of dairy stream:water is from 100:0 to 50:50, in particular of from 100:0 to 70:30. The inventors are of the opinion that a ratio in these ranges is optimal since more dilution would result in contacts that are too weak to allow good precipitation. Typically, when the dairy stream is whey concentrate or whey isolate, the dairy stream is diluted before mixing it with ethanol.

According to a preferred embodiment, before mixing the dairy stream or the diluted dairy stream with ethanol, the protein concentration in the dairy stream or the diluted dairy stream is from 0.2% to 16% w/w, in particular from 5% to 16% w/w. Maintaining the protein concentration within this specified range of from 0.2% to 16% w/w ensures that there is an adequate amount of protein available for precipitation while avoiding overly concentrated solutions that could hinder the efficiency of the process.

According to a particular embodiment, it is proposed a method of extracting glycoproteins from dairy stream, said method comprising the step of precipitating the glycoproteins of the dairy stream so as to obtain a protein concentrate by mixing a dairy stream with ethanol, thereby obtaining a dairy stream-ethanol solution
wherein the ethanol concentration in the dairy stream-ethanol solution is of from 20% to 40% v/v,
wherein the glycoproteins represent at least 50% w/w of the concentrate,
wherein the precipitation is carried out at a temperature of from 10°C to 30°C,
wherein the precipitation is carried out for a duration of from 20 minutes to 60 minutes,
wherein the precipitation is carried out under stirring,
wherein the protein concentration in the dairy stream or the diluted dairy stream is from 5% to 16% w/w,
wherein the dairy stream is sweet goat whey.

### Brief Description of Figures

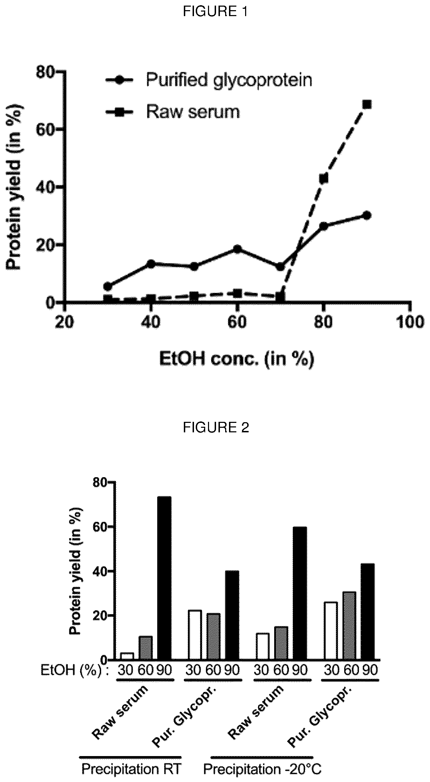

**Figure 1****: Protein precipitation yield following the addition of different ethanol concentrations.** Analysis for glycosylated proteins (circles) and predominantly non-glycosylated proteins (squares). Values are expressed as a percentage relative to the initial protein quantity.
**Figure 2****: Estimation of the protein precipitation rate at varying ethanol concentrations and temperatures.** Yields are expressed as a percentage relative to the initial protein quantity.

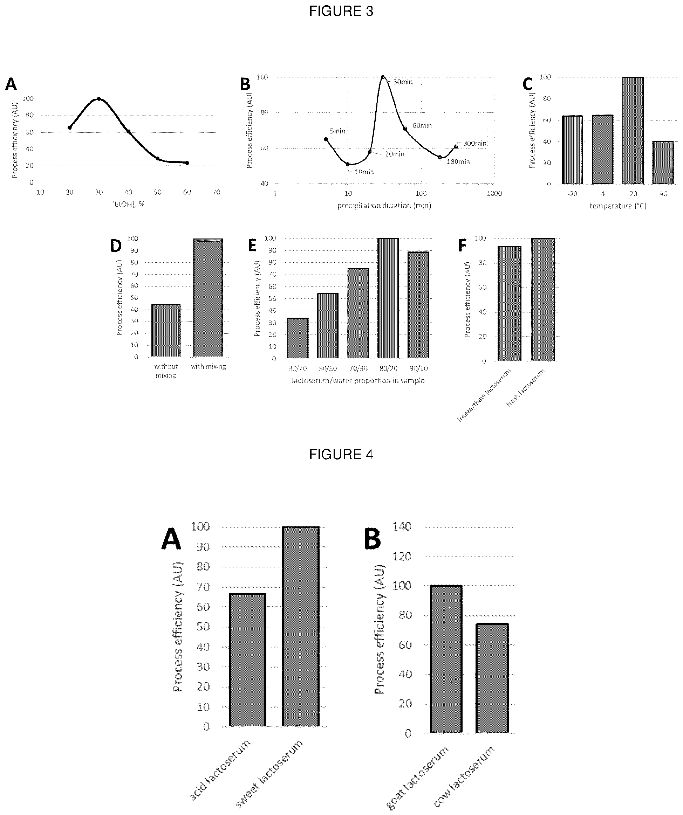

**Figure 3****: Optimization of the conditions for glycoprotein separation from whey using the invention.** Relative process efficiency based on (A) the ethanol concentration used; (B) the incubation time of the whey with ethanol; **(C)** the temperature at which precipitation is performed; **(D)** the presence or absence of agitation during precipitation; **(E)** dilution of the whey before precipitation; **(F)** a freezing/thawing step of the whey before applying the process.
**Figure 4****: Validation of the process with whey of different origins. (A)** Comparison of the process efficiency between sweet and acidic whey. **(B)** Comparison of the process efficiency between cow's and goat's whey.

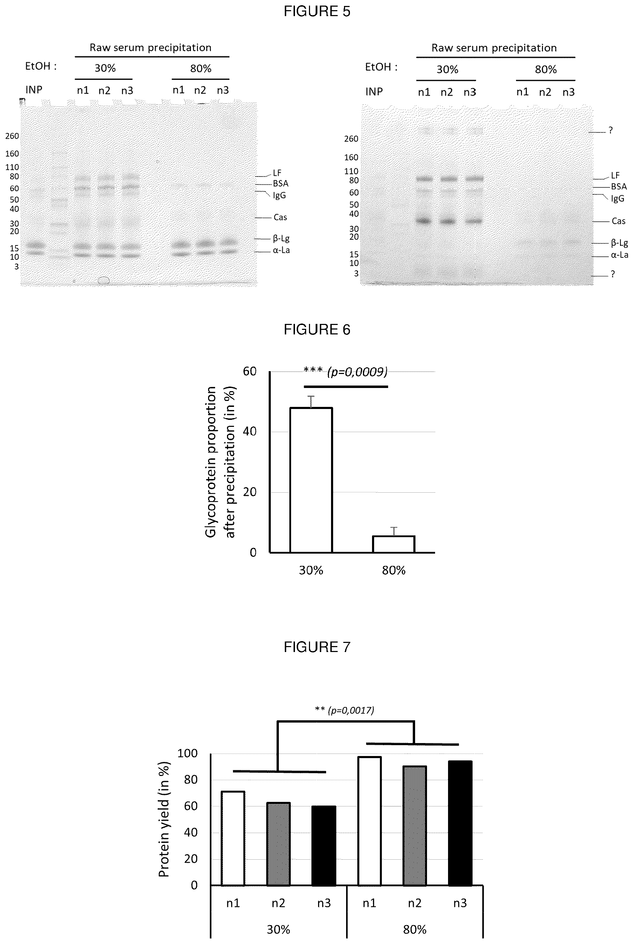

**Figure 5****: SDS-PAGE gel analysis under reducing conditions of whey proteins precipitated in 30% or 80% ethanol.** The initial whey (INP) or the proteins precipitated after the use of 30% or 80% ethanol are loaded onto the gel (10 µg per lane, Coomassie blue staining, left panel; and 20 µg per lane, glycoprotein staining (fuchsine), right panel). The identity of the proteins is indicated on the right side of the gels (LF = lactoferrin, BSA = bovine serum albumin, IgG = Immunoglobulin G, Cas = caseins, β-Lg = β-lactoglobulin, α-La = α-lactalbumin).
**Figure 6****: Densitometric quantification of glycosylated proteins present in the samples of precipitated proteins from whey with 30% or 80% ethanol.** The standard deviation represents the deviation from the mean of 3 independent replicates. The statistical test performed is a Student's t-test. P=0.009 indicates that there is less than a 0.9% chance that the difference is due to random variation.
**Figure 7****: Yield of precipitated and resolubilized proteins immobilized on a concanavalin A resin.** The proteins obtained from precipitation in 30% or 80% ethanol are rehydrated and incubated with a concanavalin A resin. After the removal of the resin and any proteins potentially bound to this resin, the amount of unassociated proteins is measured and expressed as a percentage relative to the initial protein quantity. The statistical test performed is a Student's t-test.

### Examples

### Results

### 1. Impact of ethanol on the precipitation of glycosylated and non-glycosylated proteins

Pure glycosylated proteins, or predominantly non-glycosylated proteins (99% non-glycosylated), were exposed to varying ethanol concentrations (**Figure 1**). The protein precipitation yields showed that at low ethanol concentrations, glycosylated proteins precipitate more than non-glycosylated proteins, suggesting that glycosylated proteins precipitate more easily at low ethanol concentrations. Then the inventors found the ethanol concentration at which glycosylated protein precipitation is maximal and non-glycosylated protein precipitation is minimal, to obtain the most enriched sample in glycosylated proteins (**Figure 2**). Additionally, precipitation tests were conducted at room temperature and at -20°C. It was found that the optimal conditions for glycosylated protein purification involve using ethanol at a final concentration of 30% and at room temperature.

To refine the experimental conditions that maximize the proportion of glycosylated proteins recovered through the invention, several parameters were tested on sweet goat whey, including **(****Figure 3****):**
- The final ethanol concentration in contact with the whey [20 - 90%],
- Precipitation time [5 - 300 min],
- Precipitation temperature [-20 - 40°C],
- Agitation during precipitation: presence or absence,
- Protein concentration in the whey in contact with 30% ethanol,
- The state of the whey for process efficiency: fresh or frozen.

These experimental approaches allowed to identify optimal operating conditions for the invention: final [EtOH] = 30% (**Figure 3A**), precipitation time = 30 minutes (**Figure 3B**), temperature = 20°C (**Figure 3C**), under agitation (**Figure 3D**), with whey diluted to 20% (**Figure 3E**). Pre-freezing the whey at -20°C (for durations ranging from 1 day to 3 years) has no effect on process efficiency **(****Figure 3F****).**

The process parameters were optimized on sweet goat whey (i.e., a by-product from the draining of rennet-coagulated cheese). Successful trials were also conducted on acidic whey (i.e., a by-product from the draining of acid-coagulated cheese), known to be very rich in minerals (**Figure 4A**).

Finally, the process was tested on whey from the draining of cow's milk cheese and yielded results comparable to those obtained for goat milk (**Figure 4B**).

### 2. Implementation of the process on purification of glycoproteins from goat whey

The purification of glycosylated proteins was then tested using sweet goat whey (**Figure 5**). Whey is exposed to ethanol concentrations of 30% or 80%, in triplicate. The gel on the left visualizes all proteins, while the gel on the right only visualizes glycosylated proteins (using periodic acid and fuchsine staining). The lane marked INP represents the initial whey, rich in soluble milk proteins (β-lactoglobulin, α-lactalbumin). The staining of glycoproteins in the 'INP' fraction (right panel) shows that very few proteins are glycosylated. In contrast, once the implemented process is applied, the use of 30% ethanol allows for the drastic purification and enrichment of the glycosylated protein fraction from milk (as evidenced by the intensity of pink in the corresponding lanes). The use of 80% ethanol leads to the precipitation of all proteins, without distinction between glycosylated and non-glycosylated, serving as a negative control.

The challenge, in terms of health claims, aims to potentially promote a prebiotic action of these glycosylated proteins by coating the surface of the consumer's digestive system. Therefore, verifying the adhesion capabilities of these glycosylated proteins to intestinal cells seems essential. A preliminary *in vitro* analysis has confirmed that the proteins possess a structure compatible with adhesion to lectins after precipitation. The proteins precipitated in 30% or 80% ethanol are rehydrated in a PBS buffer at pH 6.8 and then incubated with a resin (in excess) to which concanavalin A, a mannose-specific lectin, is grafted. If the glycosylated proteins possess a structure compatible with their adhesive functions, they will be immobilized on the resin (**Figure 7**). The analysis of proteins not immobilized on the resin shows that 50% of the proteins from a precipitation in 30% ethanol are still in solution, in accordance with **Figure 5****,** indicating that 50% of the proteins in this sample are glycosylated. In contrast, incubation of the resin with proteins precipitated in 80% ethanol and then resolubilized shows that approximately 100% of the proteins are still in solution, consistent with the fact that this sample is not enriched in glycosylated proteins, which are therefore not retained by the concanavalin A resin.

### Discussion

In 2020, the global infant formula market was valued at 1.76 million tons, with a projected growth of 1.2% over the next few years until 2024 (Source: Global Data).

Parents are increasingly aware of their baby's nutritional needs and the impact of diet on their development. They want the best in terms of nutrition. Purchasing infant formulas is considered a reasoned purchase, not made at random. Infant formulas aim to meet the needs of babies as effectively as possible. Specific ingredients are incorporated, such as lactoferrin, alpha-lactalbumin, HMOs (human milk oligosaccharides), MFGM (milk fat globule membrane), organic ingredients, or goat milk-based ingredients. These new ingredients offer real nutritional benefits and can contribute to the diversification and enhancement of infant milks.

The benefits of using glycoproteins derived from agro-resources or their by-products are:
- Protection against infections *(E. coli, H. pylori, C. difficile, Shigella,* Cryptosporidium, Streptococci, rotavirus, etc.);
- Strengthening of the immune system;
- Role in the prevention of certain cancers;
- Promotes the colonization of the intestine by certain 'positive' health bacteria.

These benefits lead to the formulation of food ingredients for various populations, from newborns to elderly. Due to their interaction with bacteria and viruses, their use is also relevant in surface treatment, particularly in medical environments. Thus, biofilm formation is limited, and the elimination of viruses and bacteria is enhanced.

The purification of glycosylated proteins from whey will require only an ethanol-precipitation step followed by a centrifugation. The tests already conducted show that the glycosylated proteins in bovine and goat whey precipitate after the addition of ethanol at an optimal final concentration of 30%. At these ethanol concentrations, non-glycosylated proteins do not precipitate, or do so very minimally, allowing for the enrichment of the glycosylated protein fraction. Once precipitated, simple centrifugation enables the separation of glycoproteins from non-glycosylated proteins. Thus, it is evident that the costs associated with the application of this process are extremely modest. Theoretical cost calculations show that purifying glycosylated proteins from one liter of whey with the process of the invention costs around €0.50, compared to approximately €1,000 to €10,000 for chromatography-based approaches (this range of €1,000 to €10,000 depends on how many times the resin can be reused and the cost of the purified lectin, which varies between different lectins). Another advantage is that all glycosylated proteins are retained, not just certain categories, as is the case with currently available methods. Indeed, while there are solutions today for purifying glycosylated proteins from whey, they require the use of chromatography columns in which lectins (a family of proteins capable of binding to sugars and glycosylated proteins via their glycosylation sites) are immobilized on a resin. For example, a lectin immobilized on the chromatography column's resin can bind glycosylated proteins, but with high specificity. For instance, concanavalin A, the most commonly used purified lectin in biochemical research, only interacts with mannoses. As a result, only glycosylated proteins containing accessible mannoses will be immobilized on the resin and thus purified. Furthermore, the implementation cost of these approaches is such that glycosylated proteins are currently underutilized.

## Claims

1. A method of extracting glycosylated proteins from dairy stream, said method comprising the step of precipitating the glycosylated proteins of the dairy stream so as to obtain a protein concentrate by mixing a dairy stream with ethanol, thereby obtaining a dairy stream-ethanol solution wherein the ethanol concentration in the dairy stream-ethanol solution is of from 20% to 60% v/v, and wherein the glycoproteins represent at least 30% w/w of the concentrate.

2. The method of claim 1 wherein the precipitation is carried out at a temperature of from -20°C to 60°C.

3. The method of claim 2 wherein the precipitation is carried out at a temperature of from 10°C to 30°C.

4. The method of any of claims 1 to 3 wherein the precipitation is carried out for a duration of from 5 minutes to 300 minutes.

5. The method of claim 4 wherein the precipitation is carried out for a duration of from 20 minutes to 60 minutes.

6. The method of any of claims 1 to 5 wherein the precipitation is carried out under stirring.

7. The method of any of claims 1 to 6 wherein the ethanol concentration in the dairy stream-ethanol solution is of from 20% to 40% v/v.

8. The method of any of claims 1 to 7 wherein the dairy stream is diluted.

9. The method of any of claims 1 to 8 wherein the protein concentration in the dairy stream or the diluted dairy stream is of from 0.2% to 16% w/w, in particular of from 5% to 16% w/w.

10. The method of any of claims 1 to 9 wherein the protein concentrate comprises at least 40% of glycoproteins w/w.

11. 12. The method of claim 10 wherein the protein concentrate comprises at least 50% of glycoproteins w/w.

12. The method of any of claims 1 to 11 wherein the dairy stream is from goat milk, bovine milk, sheep milk or human milk

13. The method of claim 12 wherein the dairy stream is from goat milk.

14. The method of any of claims 1 to 13 wherein the dairy stream is whey, in particular sweet whey.

15. The method of claim 14 wherein the whey is sweet goat whey.
